# EUROPÄISCHE PATENTSCHRIFT

(11) **EP 1 983 105 B1**
(45) Veröffentlichungstag und Bekanntmachung des Hinweises auf die Patenterteilung: **09.10.2013**
(21) Anmeldenummer: 08005940.5
(22) Anmeldetag: 28.03.2008
(51) Int. Cl.: E01C 23/088, E01C 21/00, B60K 5/08, B60W 10/00

(54) **Selbstfahrende Baumaschine insbesondere Strassenfräsmaschine, Recycler oder Stabilisierer**
Self-propelling construction machine, in particular road milling machine, recycler or stabiliser
Engin de travaux publics automoteur, en particulier machine de fraisage, recycleur ou stabilisateur

(30) Priorität: 20.04.2007 DE 102007019202
(43) Veröffentlichungstag der Anmeldung: 22.10.2008
(60) Teilanmeldung: 13183034.1
(73) Patentinhaber: Wirtgen GmbH, 53578 Windhagen (DE)
(72) Erfinder: Berning, Christian, 53909 Zülpich (DE); Simons, Dieter, 53567 Buchholz (DE); Busley, Peter, 53545 Linz/Rhein (DE)
(74) Vertreter: Oppermann, Frank

(56) Entgegenhaltungen:
- EP-A1- 1 818 524
- WO-A1-2006/108757
- US-A- 3 948 049
- US-A1- 2002 084 120

## Beschreibung

Die Erfindung betrifft eine selbstfahrende Baumaschine, die über eine Arbeitseinheit zur Durchführung von für die Baumaßnahme erforderlichen Arbeiten verfügt. Insbesondere betrifft die Erfindung eine Straßenfräsmaschine, einen Recycler oder einen Stabilisierer.

Im Straßenbau werden selbstfahrende Baumaschinen unterschiedlicher Bauart eingesetzt. Zu diesen zählen die bekannten Straßenfräsmaschinen, Recycler oder Stabilisierer. Mit den bekannten Straßenfrasmaschinen können bestehende Straßenschichten des Straßenoberbaus abgetragen und mit den bekannten Recyclern bestehende Straßenbeläge wiederhergestellt werden. Die bekannten Stabilisierer dienen der Vorbereitung des Unterbaus für den Straßenbau.

Derartige selbstfahrende Baumaschinen verfügen über eine Arbeitseinheit, bei der es sich um eine Arbeitswalze, insbesondere eine mit Fräsmeißeln bestückte Fräswalze handelt. Die Arbeitswalze wird von einer Antriebseinheit angetrieben. Zur Übertragung der Antriebsleistung von der Antriebseinheit auf die Arbeitseinheit dient eine Kranubertiagungseinheit.

Die DE 10 2005 017 754 A1 beschreibt eine selbstfahrende Baumaschine, insbesondere Straßenfräsmaschine, Recycler oder Stabilisierer. Die Antriebseinheit der bekannten Baumaschine weist einen Verbrennungsmotor auf, der die Arbeitswalze über ein Zugmittelgetriebe, insbesondere Riemengetriebe antreibt. Die Baumaschine sieht eine Aufteilung des Antriebsstrangs in zwei Gruppen vor, wobei die eine Gruppe den Verbrennungsmotor enthält, der relativ weich an dem Maschinenrahmen gelagert ist, wodurch die auf den Maschinenrahmen übertragenen Schwingungen stark gedämpft werden, und die andere Gruppe, die die Arbeitswalze enthält, mit hoher Festigkeit nahezu starr am Maschinenrahmen gelagert ist, wodurch höhere Kräfte abgestützt werden und damit höhere Leistungen übertragbar sind.

Die DE 10 2005 017 754 A1 weist explizit darauf hin, dass bei dem Bemühen, die Leistung zu erhöhen, der Platzbedarf für den Antriebsmotor steigt, der innerhalb der fest vorgegebenen Transportbreite der Baumaschine untergebracht werden muss. Ein Überschreiten der vorgegebenen Transportbreite hätte zur Folge, dass ein Transport der Baumaschine nur mit einer Sondergenehmigung möglich wäre. Aufgrund dieser Beschränkung sind der verfügbaren Leistung der Antriebseinheit der Baumaschine also Grenzen gesetzt.

Aus der US 2002/0084120 A1 ist eine Anordnung von mehreren Antriebseinheiten bekannt, die über eine Kraftübertragungseinrichtung miteinander verbunden sind. Die einzelnen Antriebseinheiten können unterschiedlich ausgebildete Motoren sein, bspw. Verbrennungsmotoren oder Elektromotoren. Dadurch soll eine große Flexibilität erreicht werden. Die US 2002/0084120 A1 schlägt vor, die Motoranordnung auch in selbstfahrenden Baumaschinen einzusetzen.

Die US 3 948 049A zeigt eine Baumaschine mit den Merkmalen des Oberbegriffs des Anspruchs 1 auf, wobei die Antriebseinheit von zwei Antriebsmotoren gemeinsam angetrieben ist. Diese Baumaschine ist mit einer hydraulischen Kraftübertragung ausgesttatet

Der Erfindung liegt die Aufgabe zu Grunde, eine Baumaschine der eingangs genannten Art zu schaffen, die ohne Überschreitung der fest vorgegebenen Transportbreite eine Antriebseinheit aufweist, die über eine gegenüber den bekannten Baumaschinen höhere Leistung verfügt.

Diese Aufgabe wird erfindungsgemäß mit den Merkmalen des Patentanspruchs 1 gelöst. Vorteilhafte Ausführungsformen der Erfindung sind Gegenstand der Unteransprüche.

Die erfindungsgemäße Baumaschine hat eine Antriebseinheit, die einen ersten Antriebsmotor und einen zweiten Antriebsmotor aufweist, wobei die Kraftübertragungseinrichtung derart ausgebildet ist, dass die Antriebsleistung des ersten und zweiten Antriebsmotors gleichzeitig auf die Arbeitseinheit übertragbar ist und zeichnet sich dadurch aus, dass die die Kraftübertragungseinrichtung mindestens ein Riemengetriebe aufweist, mit dem die Antriebsleistung des ersten und zweiten Antriebsmotors gleichzeitig auf die Arbeitseinheit übertragbar ist, das Riemengetriebe eine erste Riemenscheibe, die drehfest mit einer ersten von dem ersten Antriebsmotor antreibbaren Abtriebswelle verbunden ist, und eine zweite Riemenscheibe aufweist, die drehfest mit einer von dem zweiten Antriebsmotor antreibbaren Antriebswelle verbunden ist, und eine dritte Riemenscheibe aufweist, die mit einer die Arbeitseinheit antreibenden Antriebswelle drehfest verbunden ist, wobei über die Riemenscheiben mindestens ein Treibriemen läuft, und die Einrichtung zum Antrieb von mindestens einer Hydraulikpumpe zwischen dem ersten Antriebsmotor und der ersten Abtriebswelle angeordnet ist.

Auch wenn in diesem Zusammenhang von einem ersten und einem zweiten Antriebsmotor die Rede ist, kann die Antriebseinheit noch über weitere Antriebsmotoren verfügen, wobei die Antriebsleistung sämtlicher Motoren gleichzeitig auf die Arbeitseinheit übertragbar ist. In der Praxis wird aber eine Antriebseinheit mit "nur" einem ersten und einem zweiten Antriebsmotor ausreichend sein.

Im Hinblick auf die besonderen Anforderungen von selbstfahrenden Baumaschinen und der sich aus den besonderen Anforderungen ergebenden Anordnung der einzelnen Aggregate der Baumaschine hat sich gezeigt, dass der Einsatz von zwei oder auch mehr als zwei Antriebsmotoren kleinerer Leistung anstelle eines Antriebsmotors mit einer größeren Leistung erhebliche Vorteile für die Baumaschine, insbesondere die Straßenfräse, den Recycler oder den Stabilisierer bietet.

Der Einsatz von zwei Antriebsmotoren kleinerer Leistung anstelle eines Motors größerer Leistung führt zu einem wesentlich kompakteren Aufbau der Antriebseinheit, der erst den Einsatz eines Antriebs mit einer gegenüber den bekannten Baumaschinen wesentlich höheren Leistung möglich macht. Bisher ist von Antriebseinheiten mit einer derart hohen Leistung bei Baumaschinen, insbesondere Straßenfräsen, Recyclern oder Stabilisierern, wegen der fest vorgegebenen Transportbreite der Maschine abgesehen worden. Eine Antriebseinheit mit einer höheren Leistung hätte eine Überschreitung der maximalen Transportbreite erforderlich gemacht, die eine Sondergenehmigung für den Transport der Baumaschine erfordert hätte.

Neben der Erhöhung der Leistung bietet die mehrmotorige Antriebseinheit noch die folgenden Vorteile.

Für die Antriebsmotoren können handelsübliche Motoren mit verhältnismäßig geringer Leistung eingesetzt werden, die im Allgemeinen gegenüber größeren Motoren mit höherer Leistung kostengünstiger sind.

Auch wird die Wartung der Baumaschine im Vergleich zu Baumaschinen geringer Leistung nicht durch den Einsatz eines anderen Motors erschwert, da die erfindungsgemäße Baumaschine höherer Leistung mit zwei Antriebsmotoren bezogen auf den einzelnen Antriebsmotor die gleichen Wartungsarbeiten oder auch Ersatzteile erfordert, wie eine Baumaschine mit geringerer Leistung, die nur über einen der Antriebsmotoren verfügt.

Des Weiteren können sich bei der mehrmotorige Antriebseinheit Vorteile bei der Optimierung der Motoren, insbesondere Verbrennungsmotoren, im Hinblick auf Kraftstoffverbrauch und Schadstoffausstoß ergeben. Zum einen können zwei Motoren mit kleinerer Leistung gegebenenfalls mit geringerem Kraftstoffverbrauch und Schadstoffausstoß betrieben werden als ein Motor größerer Leitung. Zum anderen ist in dem Fall, dass nicht die gesamte Leistung erforderlich ist, beispielsweise im Fall von kleinen Frästiefen und im Rangierbetrieb bzw. beim Umsetzen der Maschine, ein Teillastbetrieb mit nur einem kleineren Motor geringerer Leistung möglich, der einen geringere Kraftstoffverbrauch und Schadstoffausstoß hat.

Für die Erfindung ist grundsätzlich unerheblich, wie die Arbeitseinheit ausgebildet ist, so lange die Arbeitseinheit über die Arbeitsmittel verfügt, mit denen für die Baumaßnahme erforderliche Arbeiten durchgeführt werden können. Wenn die Baumaschine eine Straßeafräsmaschine, ein Recycler oder Stabilisierer ist, weist die Arbeitseinheit eine Arbeitswalze, insbesondere eine mit Fräsmeißeln bestückte Fräswalze auf.

Bei einer bevorzugten Ausführungsform der erfindungsgemäßen Baumaschine weist die Kraftübertragungseinrichtung zur Übertragung der Antriebsleistung von der Antriebseinheit auf die Arbeitseinheit eine erste Einrichtung zum Schalten des Drehmoments des ersten Antriebsmotors und eine zweite Einrichtung zum Schalten des Drehmoments des zweiten Antriebsmotors, beispielsweise eine erste und zweite Schaltkupplung auf. Dadurch ist es möglich, den einen Antriebsmotor als Hauptmotor und den anderen Antriebsmotor als Zusatzmotor zu betreiben. Beispielsweise kann der zweite Antriebsmotor nur dann zugeschaltet werden, wenn die hohe Leistung erforderlich ist. Es ist grundsätzlich aber auch möglich, dass beide Antriebsmotoren nur gleichzeitig betrieben werden können. Dann kann auch eine der beiden Schalikupplungen entfallen. Auf jeden Fall sollte aber die Möglichkeit bestehen, die Arbeitseinheit von der Antriebseinheit abzukoppeln.

Eine besonders bevorzugte Ausführungsform der Baumaschine sieht vor, dass der erste und zweite Antriebsmotor in dem Maschinenrahmen quer zur Fahrtrichtung der Baumaschine angeordnet sind. Eine derartige Anordnung der Antriebsmotoren hat den Vorteil, dass die Kraftübertragungseinheit zur Übertragung der Leistung von der Antriebseinheit auf die Arbeitseinheit, deren Antriebswelle bei den bekannten Straßenfräsen, Recyclern oder Stabilisierern ebenfalls quer zur Fahrtrichtung verläuft, einen verhältnismäßig einfachen Aufbau haben kann.

Die Antriebseinheit der erfindungsgemäßen Baumaschine erlaubt eine Leistungserhöhung bei der beschränkten Baubreite der Maschine unter Berücksichtigung der vorgegebenen Anordnung der einzelnen Aggregate, ohne dass umfangreiche, insbesondere kostspielige Veränderungen an der Konstruktion der Baumaschine erforderlich wären.

Eine weitere besonders bevorzugte Ausführungsform sieht vor, dass der erste und zweite Antriebsmotor im Abstand zueinander, möglichst dicht nebeneinander liegend oder auch dicht übereinander liegend angeordnet sind. Die nebeneinander liegenden Motoren können in einer Ebene angeordnet sein, die oberhalb der Ebene liegt, in der die Arbeitseinheit am Maschinenrahmen angeordnet ist. Dadurch wird bei der vorgegebenen Transportbreite eine besonders platzsparende Anordnung der einzelnen Aggregate erzielt. Die übereinander liegenden Motoren können in Fahrtrichtung auch vor oder hinter der Arbeitseinheit angeordnet sein.

Die Antriebsmotoren sind vorzugsweise Verbrennungsmotoren, insbesondere Dieselmotoren. Vorzugsweise haben beide Motoren die gleiche Leistung, so dass eine Verdoppelung der Leistung bei gleichzeitigem Betrieb beider Motoren möglich ist. Grundsätzlich ist es aber auch möglich, dass einer der beiden Motoren eine größere Leistung als der andere Motor hat.

Weiterhin sind die Antriebsmotoren vorzugsweise Motoren gleicher Bauart, auch wenn sie sich in der Leistung von einander unterscheiden sollten. Dadurch wird die Ersatzteilbeschaffung und Wartung der Motoren vereinfacht. Vorzugsweise sind die Motoren die gleichen Motoren, die sich weder in Bauart noch Leistung von einander unterscheiden.

Neben der Arbeitseinheit kann die Antriebseinheit noch weitere Aggregate der Baumaschine antreiben, zu denen bei den Straßenfräsmaschinen, Recyclern oder Stabilisierern beispielsweise Aggregate für die Höhenverstellung, die Lenkung sowie die Wasserpumpe zählen. Diese Verbraucher erfordern aber eine wesentlich geringere Leistung als der Antrieb der Arbeitswalze. Vorzugsweise werden diese Aggregate mittels Hydraulikpumpen angetrieben.

Die Einrichtung zum Antrieb der Hydraulikpumpen für die Nebenaggregate ist vorzugsweise an den ersten Antriebsmotor gekoppelt, der den Hauptmotor darstellt. Vorzugsweise weist der Antrieb für die Hydraulikpumpen für die Nebenaggregate ein Pumpenverteilergetriebe auf.

Die Kraftübertragungseinrichtung weist ein Zugmittelgetriebe auf, das ein Riemengetriebe ist.

Das Riemengetriebe weist eine erste Riemenscheibe, die drehfest mit einer ersten von dem ersten Antriebsmotor antreibbaren Abtriebswelle verbunden ist, und eine zweite Riemenscheibe auf, die drehfest mit einer von dem zweiten Antriebsmotor antreibbaren Abtriebswelle verbunden ist, und eine dritte Riemenscheibe auf, die mit einer die Arbeitseinheit antreibenden Antriebswelle drehfest verbunden ist. Über die Riemenscheiben läuft mindestens ein Treibriemen, wodurch die Antriebswelle der Arbeitseinheit von den Abtriebswellen der beiden Motoren angetrieben wird.

Die mehrmotorige Antriebseinheit der erfindungsgemäßen Baumaschine sieht in vorteilhafter Weise vor, dass die erste und zweite Abtriebswelle jeweils über eine erste und zweite gelenkige Kopplungseinrichtung an den ersten bzw. zweiten Antriebsmotor gekoppelt sind. Grundsätzlich ist es aber auch möglich, dass nur eine der beiden Antriebsmotoren an die Antriebswelle über eine gelenkige Kopplungseinrichtung gekoppelt ist. Daraus ergibt sich der Vorteil, dass die Lagerung des Antriebsmotors erheblich weicher erfolgen kann als die Lagerung der übrigen Elemente des Antriebsstrangs, die so steif wie möglich an dem Maschinenrahmen befestigt sein sollten. Die gelenkige Kopplungseinrichtung kann drehstarr, beispielsweise eine Kardanwelle, oder drehelastisch, beispielsweise eine Elastomerkupplung sein.

Zwischen Antriebsmotor und Abtriebswelle ist die Einrichtung zum Antrieb von mindestens einer Hydraulikpumpe angeordnet. Dabei ist es grundsätzlich möglich, die Einrichtung zum Antrieb der Hydraulikpumpe zwischen Antriebsmotor und Schaltkupplung oder die Schaltkupplung zwischen Antriebsmotor und Einrichtung zum Antrieb der Hydraulikpumpen anzuordnen. Die Einrichtungen zum Schalten des Drehmoments des ersten bzw. zweiten Antriebsmotors sind vorzugsweise zwischen dem Antriebsmotor und der ersten bzw. zweiten Abtriebswelle angeordnet.

Verbrennungsmotoren im allgemeinen geben prinzipbedingt keine gleichförmige Drehbewegung ab. Der Drehung des Abtriebs sind immer auch Drehschwingungen überlagert. Darüber hinaus werden über die Kopplungseinrichtungen auch Schwingungen in den Maschinenrahmen eingeleitet. Bei Verbrennungsmotoren, insbesondere Dieselmotoren der neueren Generation, die sich durch eine Leichtbauweise auszeichnen, treten bei geänderten Zündzeitpunkten und Einspritzzeitpunkten zur Erfüllung der geltenden Abgasvorschriften diese Schwingungen verstärkt auf. Die Drehschwingungen können aufgrund von Materialverschleiß und -ermüdung zu geringeren Standzeiten beispielsweise der Getriebe oder Kupplungen im Abtriebstrang führen. Die sonstigen Schwingungen, sofern sie nicht von der elastischen Kopplungseinrichtung aufgenommen werden, setzen den Komfort herab, indem sie z. B. als Schall abgestrahlt werden.

Die Antriebseinheit der erfindungsgemäßen Baumaschine mit einem ersten und zweiten Verbrennungsmotor, insbesondere Dieselmotoren in Leichtbauweise, bietet auch in Bezug auf diese Schwingungen Vorteile. Bei einer bevorzugten Ausführungsform der Antriebseinheit ist im Betrieb beider Verbrennungsmotoren der Kurbelwellenwinkel der Kurbelwelle des ersten Verbrennungsmotors in Bezug auf den Kurbelwellenwinkel der Kurbelwelle des zweiten Verbrennungsmotors derart einstellbar ist, dass sich die von beiden Verbrennungsmotoren erzeugten Drehschwingungen bei der gemeinsamen Übertragung der Antriebsleistung des ersten und zweiten Verbrennungsmotors auf die Arbeitseinheit zumindest teilweise gegenseitig eliminieren. Auch die in den Maschinenrahmen eingeleiteten Schwingungen können dadurch reduziert werden.

Im Folgenden werden zwei Ausführungsbeispiele der Erfindung unter Bezugnahme auf die Zeichnungen im Einzelnen erläutert.

Es zeigen:
- Fig. 1: als Beispiel für eine selbstfahrende Baumaschine eine Großfräse in der Seitenansicht,
- Fig. 2: einen Schnitt durch die Antriebseinheit und Arbeitseinheit zusammen mit der Kraftübertragungseinrichtung der selbstfahrenden Baumaschine in vereinfachter schematischer Darstellung,
- Fig. 3: die Anordnung von Antriebseinheit, Arbeitseinheit und Kraftübertragungseinrichtung eines ersten Ausführungsbeispiels der selbstfahrenden Baumaschine von Fig. 2 in der Draufsicht, **und**
- Fig. 4: die Antriebseinheit, Arbeitseinheit und Kraftübertragungseinheit der Baumaschine von Fig. 2 in der Seitenansicht.

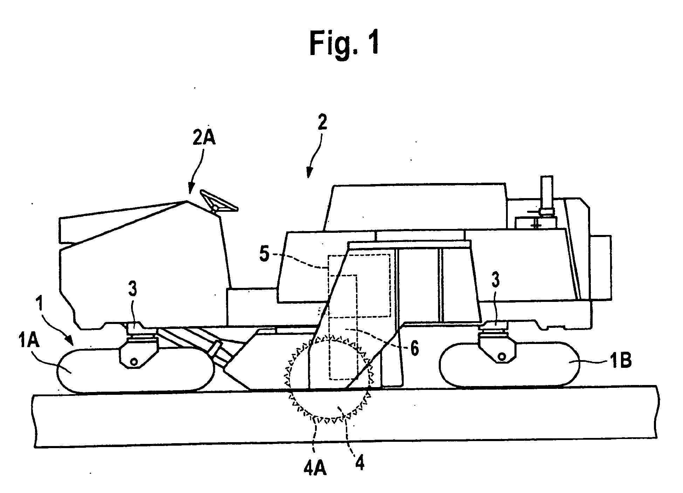

Fig. 1 zeigt als Beispiel für eine selbstfahrende Baumaschine eine so genannte Großfräse zum Abftäsen von Straßenbelägen aus Asphalt, Beton oder dergleichen. Die Großfräse weist einen von einem Fahrwerk 1 getragenen Maschinenrahmen 2 mit einem Fahrstand 2A auf. Das Fahrwerk 1 der Fräsmaschine umfasst beispielsweise vier Kettenlaufwerke 1A, 1B, die an der Vorder- und Rückseite auf beiden Seiten des Fahrzeugsrahmens angeordnet sind. Die Kettenlaufwerke, die ein Vor- und Zurückbewegen der Großfräse entlang einer Fahrspur erlauben, sind höhenverstellbar an Hubsäulen 3 befestigt, die am Maschinenrahmen 2 angebracht sind, so dass der Maschinenrahmen in eine gewünschte Lage positioniert werden kann. Es versteht sich, dass anstelle von Kettenlaufwerken auch Räder vorgesehen sein können.

Die Straßenfräsmaschine verfügt über eine Arbeitseinheit, bei der es sich um eine Fräseinrichtung mit einer Fräswalze 4 handelt, die mit Fräsmeißeln 4A bestückt ist. Die Fräswalze 4 ist am Maschinenrahmen 1 zwischen den vorderen und hinteren Kettenlaufwerken 1A,1B angeordnet. Mit der Fräswalze 4 wird der Straßenbelag abgefräst. Für den Antrieb der Fräswalze weist die Fräsmaschine eine von dem Maschinenrahmen 2 getragene Antriebseinheit 5 auf, die in Fig. 1 in gestrichelten Linien dargestellt ist. Die Antriebseinheit 5 ist an dem Maschinenrahmen 1 zwischen dem vorderen und hinteren Kettenlaufwerk 1A, 1B in einer Ebene angeordnet, die oberhalb der Ebene liegt, in der sich die Fräswalze 4 befindet.

Die Antriebseinheit 5 treibt neben der Fräswalze 4 auch die Kettenlaufwerke 1A, 1B sowie weitere Aggregate der Fräsmaschine an, zu denen beispielsweise die Hubsäulen 3 für die Höhenverstellung des Maschinenrahmens 2 oder nicht dargestellte Stellantriebe für die Lenkung oder eine nicht dargestellte Wasserpumpe zur Kühlung der Fräsmeißel 4A der Fräswalze 4 zählen.

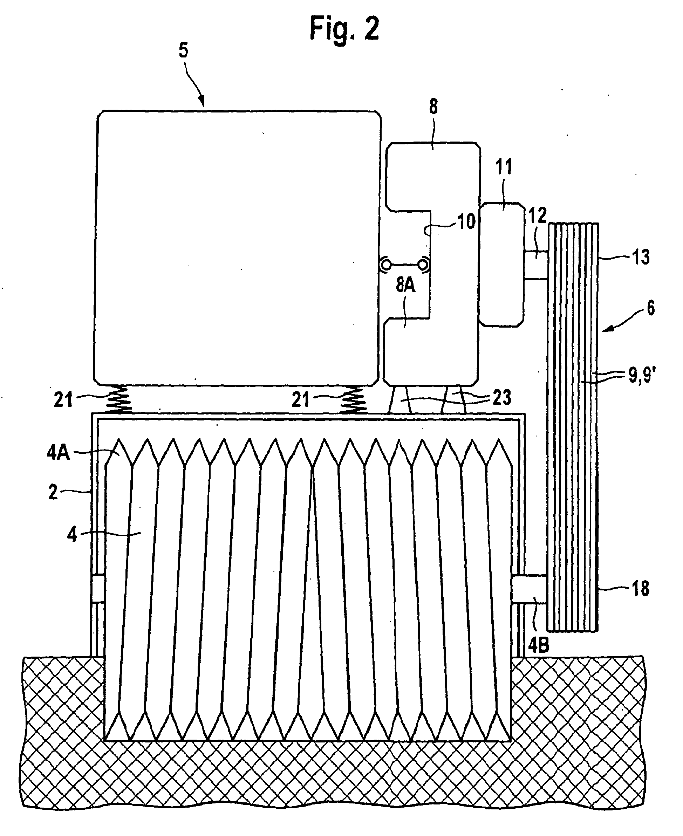

Zur Übertragung der Antriebsleistung von der Antriebseinheit 5 auf die Fräswalze 4 dient eine Kraftübertragungseinrichtung 6, die in Fig. 1 in gestrichelten Linien nur andeutungsweise dargestellt ist. Nachfolgend werden Aufbau und Funktionsweise der Antriebseinheit 5, Arbeitseinheit 4 und Kraftübertragungseinrichtung 6 der Baumaschine unter Bezugnahme auf die Fig. 2 bis 4 anhand von zwei Ausführungsbeispielen näher erläutert.

Fig. 2 zeigt, dass die mit Fräsmeißeln 4 bestückte Fräswalze quer zur Fahrrichtung in dem Maschinenrahmen 2 angeordnet ist. Die Fräswalze 4 weist eine an dem Maschinenrahmen 2 gelagerte Antriebswelle 4B auf, die sich quer zur Fahrtrichtung erstreckt. Die Antriebswelle kann auch in einem Wabengehäuse gelagert sein, das wiederum mit dem Maschinenrahmen verbunden ist.

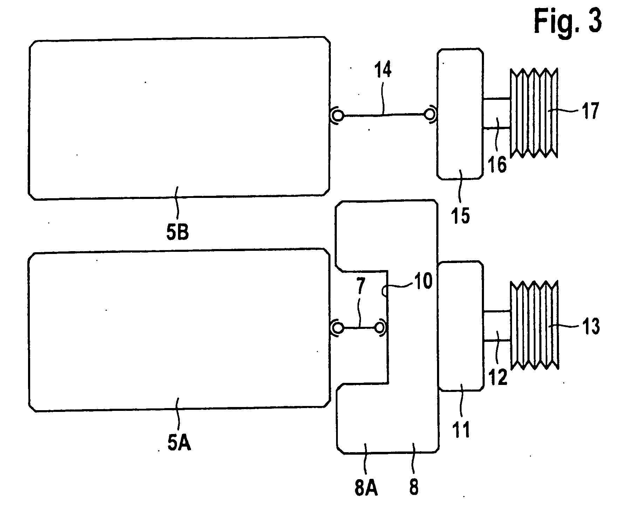

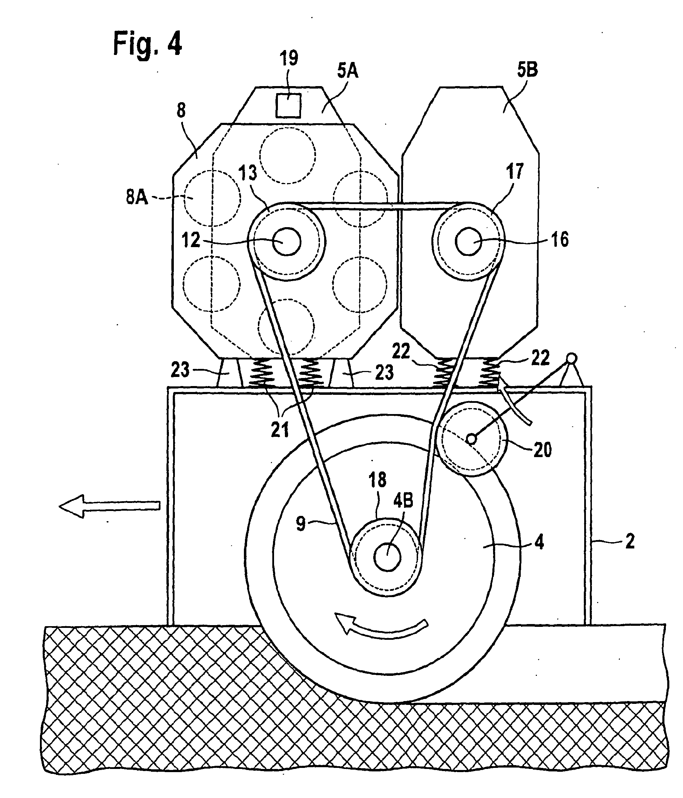

Die Antriebseinheit 5 zum Antrieb der Fräswalze 4 umfasst einen ersten und einen zweiten Verbrennungsmotor 5A, 5B, insbesondere zwei Dieselmotoren (Fig. 3, Fig. 4). Bei dem vorliegenden Ausführungsbeispiel handelt es sich bei beiden Dieselmotoren um die gleichen Motoren. Die beiden Dieselmotoren können aber auch Motoren unterschiedlicher Bauart und/oder Leistung sein.

Der erste Motor, der nachfolgend als Hauptmotor 5A bezeichnet wird, ist über eine gelenkige Kopplungseinrichtung 7, beispielsweise eine Kardanwelle oder Elastomerkupplung, mit einem Pumpenverteilergetriebe 8 (PVG) gekoppelt (Fig. 3). Im Inneren des Pumpenverteilergetriebes 8 ist ein Stirnradgetriebe angeordnet, das eine Mehrzahl von Hydraulikpumpen 8A gemeinsam antreibt, die umfangsmäßig verteilt angeordnet sind (Fig. 4). Durch die Anordnung der Hydraulikpumpen 8A ergibt sich ein zentraler freier Innenraum 10 zwischen den Hydraulikpumpen 8A, in dem sich die Kopplungseinrichtung 7 befindet. Dadurch wird eine besonders platzsparende Anordnung der Komponenten erzielt, so dass im Hinblick auf die vorgegebene Transportbreite der Baumaschine ausreichend Raum für den quer eingebauten Motor zur Verfügung steht.

Das Pumpenverteilergetriebe 8 ist über eine Einrichtung 11 zum Schalten des Drehmoments, beispielsweise eine Schaltkupplung mit einer Antriebswelle 12 gekoppelt, auf der drehfest eine Riemenscheibe 13 sitzt.

Der zweite Motor, der nachfolgend als Nebenmotor 5B bezeichnet wird, ist quer zur Fahrtrichtung in engem Abstand zu dem Hauptmotor 5A angeordnet (Fig. 3). Der Nebeomotor 5B ist über eine weitere gelenkige Kopplungseinrichtung 14, beispielsweise eine Kardanwelle oder Elastomerkupplung, mit einer zweiten Einrichtung 15 zum Schalten des Drehmoments, beispielsweise einer Schaltkupplung gekoppelt, an die wiederum eine Antriebswelle 16 gekoppelt ist, auf der eine zweite Riemenscheibe 17 sitzt.

Es ist auch möglich, dass das Pumpenverteilergetriebe 8 nicht dem Hauptmotor 5A, sondern dem Nebenmotor 5B zugeordnet ist. Ebenfalls ist es möglich, dass nicht das Pumpenverteilergetriebe 8 direkt an den Hauptmotor und die Schaltkupplung 11 an das Pumpenverteilergetriebe, sondern die Schaltkupplung 11 direkt an den Hauptmotor und das Pumpenverteilergetriebe an die Schaltkupplung gekoppelt ist. Dann kann der Freiraum 10 des Pumpmverteilergetriebes 8 anstelle der Kopplungseinrichtung 7 die Schaltkupplung 11 aufnehmen. In beiden Fällen ergibt sich eine kompakte Bauweise.

Auf der Antriebswelle 4A der Fräswalze 4 sitzt fest eine weitere Riemenscheibe 18. Auf den beiden Riemenscheiben 13 und 17 des Haupt- und Nebenmotors 5a und 5b sowie der Riemenscheibe 18 der Fräswalze 4 laufen mehrere Treibriemen 9, die von einer gelenkig am Maschinenrahmen befestigten Spannrolle 20 gespannt werden. Mit dem Riemengetriebe werden die Leistungen des Haupt- und Nebenmotors 5A, 5B addiert und auf die Fräswalze übertragen. Das Antriebskonzept erlaubt ein wahlweises Zu-/Abscbalten von Haupt- und Nebenmotor in Abhängigkeit von der benötigten Leistung. Dadurch wird eine Antriebseinheit mit einem kompakten Aufbau und einer hohen Leistung geschaffen.

Die Hydraulikpumpen 8A, die von dem Pumpenverteilergetriebe 8 angetrieben werden, dienen dem Antrieb zusätzlicher Aggregate, die aber eine wesentlich geringere Leistung als der Antrieb der Fräswalze benötigen.

Der Haupt- und Nebenmotor 5A, 5B sind mit Hilfe von elastischen Feder- /Dämpfungsmitteln 21, die eine geringe Federsteifigkeit aufweisen, an dem Maschinenrahmen 2 befestigt, so dass die insbesondere bei diesen Motoren auftretenden Vibrationen geringstmöglich auf den Maschinenrahmen übertragen werden.

Demgegenüber ist der übrige Teil des Antriebsstrangs, der das Pumpenverteilergetriebe 8 des Hauptmotors 5A einschließt, mit Feder-/Dämpfungselementen 23 an dem Maschinenrahmen 2 befestigt, die eine hohe Federsteifigkeit aufweisen bzw. starr ausgebildet sind.

Der Aufbau und die Funktionsweise der Kopplungseinrichtung und Feder-/Dämpfungsmittel sind in der DE 10 2005 017 754 A1 im Einzelnen beschrieben.

Anstelle der unter Bezugnahme auf die Figuren 2 bis **4** beschriebenen Ausführungsbeispiele ist es auch möglich, die beiden Motoren mit einem ersten Zugmittelgetriebe miteinander zu koppeln, so dass die Antriebsleistungen addiert werden, und dann mit einem zweiten Zugmittelgetriebe die Leistung beider Motoren auf die Arbeitseinheit zu übertragen.

Bei den Antriebsmotoren 5A, 5B der Antriebseinheit der erfindungsgemäßen Baumaschine handelt es sich vorzugsweise um Dieselmotoren in Leichtbauweise, bei denen grundsätzlich Drehschwingungen auftreten können.

Bei einer bevorzugten Ausführungsform der Antriebseinheit sind der Kurbelwellenwinkel der Kurbelwelle des ersten und zweiten Verbrennungsmotors 5A, 5B, insbesondere Dieselmotors, im Betrieb beider Verbrennungsmotoren einstellbar, so dass die Kurbelwelle des ersten Motors in Bezug die Kurbelwelle des zweiten Motors um einen wählbaren Winkel vor- bzw. nachlaufen kann.

Die Antriebseinheit 4 verfügt über eine Regeleinheit 19 zur Reduzierung der Schwingungen, die in der Figur 4 schematisch dargestellt ist. Die Regeleinheit 19 ist derart ausgebildet, dass der Kurbelwellenwinkel der nicht dargestellten Kurbelwelle des ersten Verbrennungsmotors 5A in Bezug auf den Kurbelwellenwinkel der nicht dargestellten Kurbelwelle des zweiten Verbrennungsmotors 5B derart eingestellt wird, dass sich die von beiden Verbrennungsmotoren erzeugten Drehschwingungen bei der gemeinsamen Übertragung der Antriebsleistung des ersten und zweiten Motors mit der Kraftübertragungseinrichtung 6 auf die Arbeitseinheit 4 zumindest teilweise eliminieren. Beispielsweise wird der erste Motor 5A so betrieben, dass dessen Kurbelwelle um einen bestimmten Winkel vorauseilt, während der zweite Motor 5B so betrieben wird, dass dessen Kurbelwelle um einen bestimmten Winkel nacheilt. Die auf den ersten und zweiten Motor zurückzuführenden Drehschwingungen, die sich auf den Antriebsstrang übertragen, sind demnach um einen bestimmten Phasenwinkel zueinander verschoben. Die Regeleinheit 19 stellt die Kurbelwellenwinkel derart ein, dass sich die im Antriebsstrang überlagernden Drehschwingungen zumindest teilweise eliminieren, d.h. sich Schwingungen mit einer bestimmten Amplitude in einer Richtung durch Schwingungen mit ähnlich großer Amplitude in die entgegengesetzte Richtung kompensieren. Gleiches gilt für die in den Maschinenrahmen eingeleiteten sonstigen Schwingungen.

## Patentansprüche

1. Selbstfahrende Baumaschine, insbesondere Straßenfräsmaschine, Recycler oder Stabilisierer, mit
einem von einem Fahrwerk (1) getragenen Maschinenrahmen (2),
einer Arbeitseinheit (4) zur Durchführung von für die Baumaßnahme erforderlichen Arbeiten,
einer von dem Maschinenrahmen getragenen Antriebseinheit (5) für den Antrieb der Arbeitseinheit,
und einer Kraftübertragungseinrichtung (6) zur Übertragung der Antriebsleistung von der Antriebseinheit auf die Arbeitseinheit,
wobei die Antriebseinheit (5) einen ersten Antriebsmotor (5A) und einen zweiten Antriebsmotor (5B) aufweist und die Kraftübertragungseinrichtung (6) derart ausgebildet ist, dass die Antriebsleistung des ersten und zweiten Antriebsmotors (5A, 5B) gemeinsam auf die Arbeitseinheit (4) übertragbar ist, und die Kraftübertragungseinrichtung (6) eine Einrichtung (8) zum Antrieb von mindestens einer Hydraulikpumpe (8A) aufweist,
**dadurch gekennzeichnet, dass**
die Kraftübertragungseinrichtung (6) mindestens ein Riemengetriebe (9, 13, 17, 18) aufweist, mit dem die Antriebsleistung des ersten und zweiten Antriebsmotors (5A, 5B) gleichzeitig auf die Arbeitseinheit (4) übertragbar ist,
das Riemengetriebe (9, 13, 17, 18) eine erste Riemenscheibe (13), die drehfest mit einer ersten von dem ersten Antriebsmotor (5A) antreibbaren Abtriebswelle (12) verbunden ist, und eine zweite Riemenscheibe (17) aufweist, die drehfest mit einer von dem zweiten Antriebsmotor (5B) antreibbaren Abtriebswelle (16) verbunden ist, und eine dritte Riemenscheibe (18) aufweist, die mit einer die Arbeitseinheit (4) antreibenden Antriebswelle (4A) drehfest verbunden ist, wobei über die Riemenscheiben (13, 17, 18) mindestens ein Treibriemen (9) läuft, und
die Einrichtung (8) zum Antrieb von mindestens einer Hydraulikpumpe zwischen dem ersten Antriebsmotor (5A) und der ersten Abtriebswelle (12) angeordnet ist.

2. Selbstfahrende Baumaschine nach Anspruch 1, **dadurch gekennzeichnet, dass** die Kraftübertragungseinrichtung (6) eine erste Einrichtung (11) zum Schalten des Drehmomentes des ersten Antriebsmotors (5A) und/oder eine zweite Einrichtung (15) zum Schalten des Drehmomentes des zweiten Antriebsmotors (5B) aufweist.

3. Selbstfahrende Baumaschine nach Anspruch 1 oder 2, **dadurch gekennzeichnet, dass** der erste und zweite Antriebsmotor (5A, 5B) in dem Maschinenrahmen (2) quer zur Fahrtrichtung der Baumaschine angeordnet sind.

4. Selbstfahrende Baumaschine nach einem der Ansprüche 1 bis 3, **dadurch gekennzeichnet, dass** der erste und zweite Antriebsmotor (5A, 5B) im Abstand zueinander in einer Ebene des Maschinenrahmens (2) angeordnet sind, die oberhalb der Ebene liegt, in der die Arbeitseinheit (4) am Maschinenrahmen angeordnet ist.

5. Selbstfahrende Baumaschine nach einem der Ansprüche 1 bis 4, **dadurch gekennzeichnet, dass** der erste und zweite Antriebsmotor (5A, 5B) Verbrennungsmotoren, insbesondere Dieselmotoren sind.

6. Selbstfahrende Baumaschine nach einem der Ansprüche 1 bis 5, **dadurch gekennzeichnet, dass** der erste Antriebsmotor (5A) und zweite Antriebsmotor (5B) die gleiche Leistung haben.

7. Selbstfahrende Baumaschine nach einem der Ansprüche 1 bis 5, **dadurch gekennzeichnet, dass** der erste Antriebsmotor (5A) eine größere Leistung als der zweite Antriebsmotor (5B) hat.

8. Selbstfahrende Baumaschine nach einem der Ansprüche 1 bis 5, **dadurch gekennzeichnet, dass** der erste und zweite Antriebsmotor (5A, 5B) Motoren gleicher Bauart sind.

9. Selbstfahrende Baumaschine nach einem der Ansprüche 1 bis 5, **dadurch gekennzeichnet, dass** der erste und zweite Antriebsmotor (5A, 5B) die gleichen Antriebsmotoren sind.

10. Selbstfahrende Baumaschine nach einem der Ansprüche 1 bis 9, **dadurch gekennzeichnet, dass** die Arbeitseinheit eine Arbeitswalze, insbesondere eine mit Fräsmeißeln (4A) bestückte Fräswalze (4) aufweist.

11. Selbstfahrende Baumaschine nach einem der Ansprüche 1 bis 10, **dadurch gekennzeichnet, dass** die Einrichtung (8) zum Antrieb von mindestens einer Hydraulikpumpe ein Pumpenverteilergetriebe für mehrere Hydraulikpumpen (8A) aufweist.

12. Selbstfahrende Baumaschine nach einem der Ansprüche 1 bis 11, **dadurch gekennzeichnet, dass** die Einrichtung (8) zum Antrieb von mindestens einer Hydraulikpumpe an den ersten Antriebsmotor (5A) gekoppelt ist.

13. Selbstfahrende Baumaschine nach einem der Ansprüche 1 bis 12, **dadurch gekennzeichnet, dass** die erste Abtriebswelle (12) über eine erste gelenkige Kopplungseinrichtung (7) an den ersten Antriebsmotor (5A) und die zweite Abtriebswelle (16) über eine zweite gelenkige Kopplungseinrichtung (14) an den zweiten Antriebsmotor (5A) gekoppelt ist.

14. Selbstfahrende Baumaschine nach einem der Ansprüche 1 bis 13, **dadurch gekennzeichnet, dass** die erste Einrichtung (11) zum Schalten des Drehmomentes des ersten Antriebsmotors (5A) zwischen dem Antriebsmotor (5A) und der ersten Abtriebswelle (12) angeordnet ist.

15. Selbstfahrende Baumaschine nach einem der Ansprüche 1 bis 14, **dadurch gekennzeichnet, dass** die zweite Einrichtung (15) zum Schalten des Drehmomentes des zweiten Antriebsmotors (5B) zwischen dem Antriebsmotor (5B) und der zweiten Abtriebswelle (16) angeordnet ist.

16. Selbstfahrende Baumaschine nach einem der Ansprüche 1 bis 15, **dadurch gekennzeichnet, dass** der erste Antriebsmotor (5A) und der zweite Antriebsmotor (5B) Verbrennungsmotoren mit Kurbelwellen sind, wobei der Kurbelwellenwinkel der Kurbelwelle des ersten Motors in Bezug auf den Kurbelwellenwinkel der Kurbelwelle des zweiten Motors einstellbar ist.

17. Selbstfahrende Baumaschine nach Anspruch 16, **dadurch gekennzeichnet, dass** der Kurbelwellenwinkel der Kurbelwelle des ersten Antriebsmotors (5A) in Bezug auf den Kurbelwellenwinkel der Kurbelwelle des zweiten Antriebsmotors (5B) derart einstellbar ist, dass sich die von den beiden Motoren erzeugten Drehschwingungen bei der gemeinsamen Übertragung der Antriebsleistung des ersten und zweiten Antriebsmotors (5A, 5B) auf die Arbeitseinheit (4) zumindest teilweise eliminieren.

18. Selbstfahrende Baumaschine nach einem der Ansprüche 1 bis 17, **dadurch gekennzeichnet, dass** die Baumaschine eine Straßenfräse oder ein Recycler oder ein Stabilisierer ist.

## Claims

1. Self-propelled construction vehicle, especially a road-milling machine, a road reconditioner, or a road stabilizer, having
a frame (2) carried by an undercarriage (1),
a working unit (4) for performing work required for the construction operation,
a drive unit (5) carried by the frame for driving the working unit,
and a power transmission device (6) for transmitting the drive power from the drive unit to the working unit,
the drive unit (5) having a first drive motor (5A) and a second drive motor (5B) and the power transmission device (6) being embodied such that the drive power for the first and second drive motors (5A, 5B) may be transmitted jointly to the working unit (4), and the power transmission device (6) having a device (8) for driving at least one hydraulic pump (8A),
**characterized in that**
the power transmission unit (6) has at least one belt drive (9, 13, 17, 18) with which the drive power for the first and second drive motors (5A, 5B) may be transmitted to the working unit (4) at the same time,
the belt drive (9, 13, 17, 18) has a first belt pulley (13) that is connected rotation-fast to a first output shaft (12) that may be driven by the first drive motor (5A) and a second belt pulley (17) that is connected rotation-fast to an output shaft (16) that may be driven by the second drive motor (5B) and a third belt pulley (18) that is connected rotation-fast to a drive shaft (4A) driving the working unit (4), at least one drive belt (9) running via the belt pulleys (13, 17, 18), and
the device (8) for driving at least one hydraulic pump is arranged between the first drive motor (5A) and the first output shaft (12).

2. Self-propelled construction vehicle in accordance with claim 1, **characterized in that** the power transmission device (6) has a first device (11) for switching the torque of the first drive motor (5A) and/or a second device (15) for switching the torque of the second drive motor (5B).

3. Self-propelled construction vehicle in accordance with claim 1 or 2, **characterized in that** the first and second drive motors (5A, 5B) are arranged in the frame (2) transverse to the direction of travel of the construction vehicle.

4. Self-propelled construction vehicle in accordance with any of claims 1 through 3, **characterized in that** the first and second drive motors (5A, 5B) are arranged at a distance from one another in a plane of the frame (2) that lies above the plane in which the working unit (4) is arranged on the frame.

5. Self-propelled construction vehicle in accordance with any of claims 1 through 4, **characterized in that** the first and second drive motors (5A, 5B) are internal combustion engines, especially diesel engines.

6. Self-propelled construction vehicle in accordance with any of claims 1 through 5, **characterized in that** the first drive motor (5A) and the second drive motor (5B) have the same output.

7. Self-propelled construction vehicle in accordance with any of claims 1 through 5, **characterized in that** the first drive motor (5A) has greater output than the second drive motor (5B).

8. Self-propelled construction vehicle in accordance with any of claims 1 through 5, **characterized in that** the first and second drive motors (5A, 5B) have the same design.

9. Self-propelled construction vehicle in accordance with any of claims 1 through 5, **characterized in that** the first and second drive motors (5A, 5B) are the same drive motors.

10. Self-propelled construction vehicle in accordance with any of claims 1 through 9, **characterized in that** the working unit has a working roller, especially a milling roller (4) equipped with cutting teeth (4A).

11. Self-propelled construction vehicle in accordance with any of claims 1 through 10, **characterized in that** the device (8) for driving at least one hydraulic pump has a pump distribution gear unit for a plurality of hydraulic pumps (8A).

12. Self-propelled construction vehicle in accordance with any of claims 1 through 11, **characterized in that** the device (8) for driving at least one hydraulic pump is coupled to the first drive motor (5A).

13. Self-propelled construction vehicle in accordance with any of claims 1 through 12, **characterized in that** the first output shaft (12) is coupled to the first drive motor (5A) via a first articulated coupling device (7) and the second output shaft (16) is coupled to the second drive motor (5A) via a second articulated coupling device (14).

14. Self-propelled construction vehicle in accordance with any of claims 1 through 13, **characterized in that** the first device (11) for switching the torque of the first drive motor (5A) is arranged between the drive motor (5A) and the first output shaft (12).

15. Self-propelled construction vehicle in accordance with any of claims 1 through 14, **characterized in that** the second device (15) for switching the torque of the second drive motor (5B) is arranged between the drive motor (5B) and the second output shaft (16).

16. Self-propelled construction vehicle in accordance with any of claims 1 through 15, **characterized in that** the first drive motor (5A) and the second drive motor (5B) are internal combustion engines with crankshafts, the crankshaft angle for the crankshaft of the first motor being adjustable with respect to the crankshaft angle for the crankshaft of the second motor.

17. Self-propelled construction vehicle in accordance with claim 16, **characterized in that** the crankshaft angle for the crankshaft of the first drive motor (5A) is adjustable with respect to the crankshaft angle for the crankshaft of the second drive motor (5B) such that the rotational vibrations generated by the two motors are at least partly eliminated during the joint transmission of the drive power from the first and second drive motors (5A, 5B) to the working unit (4).

18. Self-propelled construction vehicle in accordance with any of claims 1 through 17, **characterized in that** the construction vehicle is a road-milling machine, a road reconditioner, or a road stabilizer.

## Revendications

1. Engin de travaux publics automoteur, notamment machine de fraisage de route, recycleur ou stabilisateur, comprenant
un bâti de machine (2) porté par un mécanisme de roulement (1),
une unité de travail (4) pour la mise en oeuvre des travaux nécessaires au projet de construction,
une unité d'entraînement (5) portée par le bâti de machine pour l'entraînement de l'unité de travail,
et un dispositif de transmission de forces (6) pour la transmission de la puissance d'entraînement de l'unité d'entraînement à l'unité de travail,
l'unité d'entraînement (5) présentant un premier moteur d'entraînement (5A) et un second moteur d'entraînement (5B) et le dispositif de transmission de forces (6) étant réalisé de telle manière que la puissance d'entraînement du premier et du second moteur d'entraînement (5A, 5B) puisse être transférée ensemble à l'unité de travail (4) et le dispositif de transmission de forces (6) présentant un dispositif (8) pour l'entraînement d'au moins une pompe hydraulique (8A),
**caractérisé en ce que**
le dispositif de transmission de forces (6) présente au moins une transmission à courroie (9, 13, 17, 18), permettant de transmettre simultanément la puissance d'entraînement du premier et second moteur d'entraînement (5A, 5B) à l'unité de travail (4),
la transmission à courroie (9, 13, 17, 18) présentant une première poulie à courroie (13) qui est reliée de manière solidaire en rotation à un premier arbre de sortie (12) pouvant être entraîné par le premier moteur d'entraînement (5A), et une deuxième poulie à courroie (17) qui est reliée de manière solidaire en rotation à un arbre de sortie (16) pouvant être entraîné par le second moteur d'entraînement (5B), et une troisième poulie à courroie (18) qui est reliée de manière solidaire en rotation à un arbre d'entraînement (4A) entraînant l'unité de travail (4), au moins une courroie d'entraînement (9) passant sur les poulies à courroie (13, 17, 18), et
le dispositif (8) est disposé pour l'entraînement d'au moins une pompe hydraulique entre le premier moteur d'entraînement (5A) et le premier arbre de sortie (12).

2. Engin de travaux publics automoteur selon la revendication 1, **caractérisé en ce que** le dispositif de transmission de forces (6) présente un premier dispositif (11) pour la commutation du couple du premier moteur d'entraînement (5A) et/ou un second dispositif (15) pour la commutation du couple du second moteur d'entraînement (5B).

3. Engin de travaux publics automoteur selon la revendication 1 ou 2, **caractérisé en ce que** le premier et le second moteur d'entraînement (5A, 5B) sont disposés dans le bâti de machine (2) transversalement au sens de la marche de l'engin de travaux publics.

4. Engin de travaux publics automoteur selon l'une quelconque des revendications 1 à 3, **caractérisé en ce que** le premier et le second moteur d'entraînement (5A, 5B) sont disposés à distance dans un plan du bâti de machine (2) qui se trouve au-dessus du plan, dans lequel l'unité de travail (4) est disposée sur le bâti de machine.

5. Engin de travaux publics automoteur selon l'une quelconque des revendications 1 à 4, **caractérisé en ce que** le premier et le second moteur d'entraînement (5A, 5B) sont des moteurs à combustion, notamment des moteurs diesel.

6. Engin de travaux publics automoteur selon l'une quelconque des revendications 1 à 5, **caractérisé en ce que** le premier moteur d'entraînement (5A) et le second moteur d'entraînement (5B) ont la même puissance.

7. Engin de travaux publics automoteur selon l'une quelconque des revendications 1 à 5, **caractérisé en ce que** le premier moteur d'entraînement (5A) présente une plus grande puissance que le second moteur d'entraînement (5B).

8. Engin de travaux publics automoteur selon l'une quelconque des revendications 1 à 5, **caractérisé en ce que** le premier et le second moteur d'entraînement (5A, 5B) sont des moteurs de même type.

9. Engin de travaux publics automoteur selon l'une quelconque des revendications 1 à 5, **caractérisé en ce que** le premier et le second moteur d'entraînement (5A, 5B) sont les mêmes moteurs d'entraînement.

10. Engin de travaux publics automoteur selon l'une quelconque des revendications 1 à 9, **caractérisé en ce que** l'unité de travail présente un rouleau de travail, notamment un rouleau de fraisage (4) équipé d'outils de fraisage (4A).

11. Engin de travaux publics automoteur selon l'une quelconque des revendications 1 à 10, **caractérisé en ce que** le dispositif (8) présente, pour l'entraînement d'au moins une pompe hydraulique, une boîte de distribution à pompe pour plusieurs pompes hydrauliques (8A).

12. Engin de travaux publics automoteur selon l'une quelconque des revendications 1 à 11, **caractérisé en ce que** le dispositif (8) est couplé au premier moteur d'entraînement (5A) pour l'entraînement d'au moins d'une pompe hydraulique.

13. Engin de travaux publics automoteur selon l'une quelconque des revendications 1 à 12, **caractérisé en ce que** le premier arbre de sortie (12) est couplé par un premier dispositif de couplage articulé (7) au premier moteur d'entraînement (5A) et le second arbre de sortie (16) par un second dispositif de couplage articulé (14) au second moteur d'entraînement (5A).

14. Engin de travaux publics automoteur selon l'une quelconque des revendications 1 à 13, **caractérisé en ce que** le premier dispositif (11) est disposé pour la commutation du couple du premier moteur d'entraînement (5A) entre le moteur d'entraînement (5A) et le premier arbre de sortie (12).

15. Engin de travaux publics automoteur selon l'une quelconque des revendications 1 à 14, **caractérisé en ce que** le second dispositif (15) est disposé pour la commutation du couple du second moteur d'entraînement (5B) entre le moteur d'entraînement (5B) et le second arbre de sortie (16).

16. Engin de travaux publics automoteur selon l'une quelconque des revendications 1 à 15, **caractérisé en ce que** le premier moteur d'entraînement (5A) et le second moteur d'entraînement (5B) sont des moteurs à combustion avec des vilebrequins, l'angle de vilebrequin du vilebrequin du premier moteur pouvant être réglé sur l'angle de vilebrequin du vilebrequin du second moteur.

17. Engin de travaux publics automoteur selon la revendication 16, **caractérisé en ce que** l'angle de vilebrequin du vilebrequin du premier moteur d'entraînement (5A) peut être réglé par rapport à l'angle de vilebrequin du vilebrequin du second moteur d'entraînement (5B) de telle manière que les vibrations torsionnelles générées par les deux moteurs s'éliminent au moins en partie lors de la transmission commune de la puissance d'entraînement du premier et du second moteur d'entraînement (5A, 5B) à l'unité de travail (4).

18. Engin de travaux publics automoteur selon l'une quelconque des revendications 1 à 17, **caractérisé en ce que** l'engin de travaux publics est une machine de fraisage ou un recycleur ou un stabilisateur.
